# EUROPEAN PATENT APPLICATION

(11) **EP 4 398 538 A1**
(43) Date of publication of application: **10.07.2024**
(21) Application number: 22866550.1
(22) Date of filing: 05.09.2022
(51) Int. Cl.: H04L 45/00

(54) **ROUTING ADVERTISEMENT METHOD, PATH ESTABLISHMENT METHOD, SERVICE DATA TRANSMISSION METHOD AND AUTONOMOUS SYSTEM BORDER ROUTER**

(30) Priority: 08.09.2021 CN 202111050082
(71) Applicant: ZTE Corporation, Shenzhen, Guangdong 518057 (CN)
(72) Inventor: ZHAO, Detao, Shenzhen, Guangdong 518057 (CN)
(74) Representative: Canzler & Bergmeier Patentanwälte Partnerschaft mbB
(86) International application number: PCT/CN2022/117101
(87) International publication number: WO 2023/036087

(57) **Abstract**

Provided in the present disclosure is a path establishment method, which is applied to a second autonomous system border router (ASBR) in a second autonomous domain. The method comprises: receiving cross-domain routing, wherein the cross-domain routing is cross-domain routing that is advertised by a first ASBR in a first autonomous domain; according to an autonomous system number, a node identifier and a flexible algorithm identifier that are carried in the cross-domain routing, selecting a cross-domain link that meets a predetermined condition from among cross-domain links between a second ASBR and the first ASBR; and according to the cross-domain link that meets the predetermined condition, performing, in a second autonomous domain, intra-domain advertisement on a prefix of the cross-domain routing, a flexible algorithm identifier corresponding to the prefix and an accumulated metric value of the prefix, and generating cross-domain routing based on an intra-domain routing protocol in the second autonomous domain. Also provided in the present disclosure are a routing advertisement method, a service data transmission method, an autonomous system border router (ASBR), a provider edge (PE) device and a computer-readable storage medium.

## Description

### CROSS-REFERENCE TO RELATED APPLICATIONS

The present disclosure claims the priority of Chinese Patent Application No. 202111050082.7, filed on September 8, 2021, the contents of which are incorporated herein in their entirety by reference.

### TECHNICAL FIELD

The present disclosure relates to the field of communications, and in particular, to a routing advertisement method, a path establishment method, a service data transmission method, an autonomous system border router, a provider edge, and a computer-readable storage medium.

### BACKGROUND

Existing internal gateway protocol (IGP) calculates an optimal network path based on an IGP metric of a link. Network traffic is forwarded according to the optimal network path by default. In an actual network, the optimal network path may not meet expectations of all applications, for example, some IGP metrics are allocated according to bandwidths of links, and then a bandwidth-optimal network path calculated by IGP may not be a delay-optimal network path, and may not meet the expectations of a delay-sensitive application.

A Flexible Algorithm (Flex-Algo) technology is a technology that can perform routing based on non-IGP metrics under abundant constraints.

The Flex-Algo technology defines different algorithm contents including a metric type, a link to be included or excluded, and the like according to expectations of different services, and assigns an algorithm identifier (ID) to each defined algorithm. An IGP node establishes an optimal path by using the metric type and the constraint in the defined algorithm corresponding to the algorithm ID.

### SUMMARY

In a first aspect, an embodiment of the present disclosure provides a routing advertisement method, applied to a first autonomous system border router (ASBR) in a first autonomous domain, including: generating a cross-domain routing based on an inter-domain routing protocol according to a prefix of an intra-domain routing based on an intra-domain routing protocol in the first autonomous domain and a flexible algorithm identifier corresponding to the prefix; and advertising the cross-domain routing to a second autonomous domain through the inter-domain routing protocol.

In a second aspect, an embodiment of the present disclosure provides a path establishment method, applied to a second ASBR in a second autonomous system, including: receiving a cross-domain routing advertised by a first ASBR in a first autonomous domain, the cross-domain routing is based on an inter-domain routing protocol and generated by the first ASBR according to a prefix of an intra-domain routing based on an intra-domain routing protocol in the first autonomous domain and a flexible algorithm identifier corresponding to the prefix; selecting a cross-domain link meeting a preset condition from cross-domain links between the second ASBR and the first ASBR according to an autonomous system (As) number, a node identifier and a flexible algorithm identifier carried in the cross-domain routing; and performing intra-domain advertisement in the second autonomous domain on a prefix of the cross-domain routing, a flexible algorithm identifier corresponding to the prefix, and an accumulated metric value of the prefix, according to the cross-domain link meeting the preset condition, and generating a cross-domain routing based on an intra-domain routing protocol in the second autonomous domain.

In a third aspect, an embodiment of the present disclosure provides a service data transmission method, applied to a provider edge (PE) of a service provider in a second autonomous system, including: generating an intra-domain routing based on received link state information including a prefix, a flexible algorithm identifier corresponding to the prefix and an accumulated metric value of the prefix advertised by the path establishment method described in the second aspect; and forwarding a service packet according to the generated intra-domain routing.

In a fourth aspect, an embodiment of the present disclosure provides an ASBR, including: at least one processor; a memory having at least one computer program stored thereon, the at least one computer program, executed by the at least one processor, causes the at least one processor to implement the routing advertisement method described in the first aspect, or the path establishment method described in the second aspect; and at least one I/O interface connected between the processor and the memory and configured to implement information interaction between the processor and the memory.

In a fifth aspect, an embodiment of the present disclosure provides a PE for a service provider, including: at least one processor; a memory having at least one computer program stored thereon, the at least one computer program, executed by the at least one processor, causes the at least one processor to implement the service data transmission method described in the third aspect; and at least one I/O interface connected between the processor and the memory and configured to implement information interaction between the processor and the memory.

In a sixth aspect, an embodiment of the present disclosure provides a computer-readable storage medium having a computer program stored thereon, the computer program, executed by a processor, causes the processor to implement the routing advertisement method described in the first aspect, the path establishment method described in the second aspect, or the service data transmission method described in the third aspect.

### BRIEF DESCRIPTION OF DRAWINGS

Fig. 1 is a flowchart of a routing advertisement method according to an embodiment of the present disclosure.
Fig. 2 is a flowchart of a part of operations of a routing advertisement method according to an embodiment of the present disclosure.
Fig. 3 is a flowchart of a path establishment method according to an embodiment of the present disclosure.
Fig. 4 is a flowchart of a part of operations of a path establishment method according to an embodiment of the present disclosure.
Fig. 5 is a flowchart of a part of operations of a path establishment method according to an embodiment of the present disclosure.
Fig. 6 is a flowchart of a service data transmission method according to an embodiment of the present disclosure.
Fig. 7 is a schematic diagram of a basic principle of a Flex-Algo according to an embodiment of the present disclosure.
Fig. 8 is a schematic diagram of a Flex-Algo between two autonomous domains according to an embodiment of the present disclosure.
Fig. 9 is a schematic diagram of a Flex-Algo between two autonomous domains according to an embodiment of the present disclosure.
Fig. 10 is a schematic diagram of establishing an end-to-end traffic engineering path across autonomous domains by using a Flex-Algo according to an embodiment of the present disclosure.
Fig. 11 is a schematic diagram of establishing an end-to-end network slice with node isolation across autonomous domains by using a Flex-Algo according to an embodiment of the present disclosure.
Fig. 12 is a schematic diagram of establishing an end-to-end network slice with link isolation across autonomous domains by using a Flex-Algo according to an embodiment of the present disclosure.
Fig. 13 is a schematic block diagram of an autonomous system border router (ASBR) according to an embodiment of the present disclosure.
Fig. 14 is a schematic block diagram of a provider edge (PE) according to an embodiment of the present disclosure.
Fig. 15 is a schematic diagram of a computer-readable storage medium according to an embodiment of the present disclosure.

### DETAIL DESCRIPTION OF EMBODIMENTS

It should be understood that the specific embodiments described herein are only used to illustrate the present disclosure and do not limit the present disclosure.

In following description, suffixes such as "module", "component", or "unit" used to indicate elements are used only for facilitating the explanation of the present disclosure, and have no peculiar meaning by themselves. Thus, "module", "component" or "unit" may be used mixedly.

The Flex-Algo technology may realize traffic engineering and topology isolation through an intra-domain routing protocol, but the current Flex-Algo technology may only support a scene of a single autonomous domain, and for a service crossing autonomous domains, since the intra-domain routing protocol is not deployed between the autonomous domains, a forwarding path crossing the autonomous domains cannot be created.

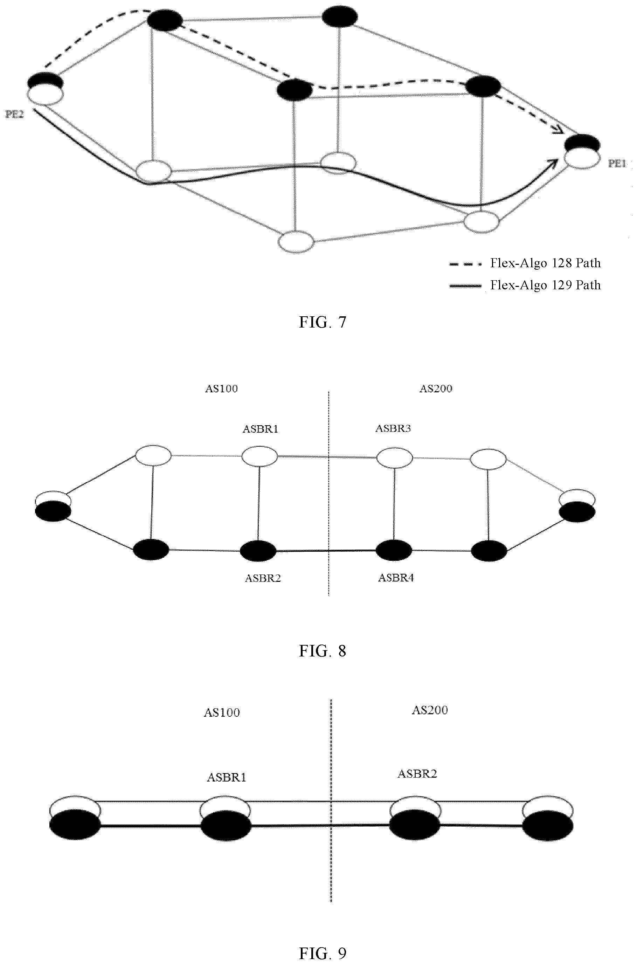

Taking Fig. 7 as an example, the Flex-Algo technology may define algorithms according to expectations of a service, and assign Flex-Algo identifiers 128 and 129 to the algorithms, in the algorithm with the Flex-Algo identifier 128 (also called a Flex-Algo 128), a delay is used as a metric to perform routing, and in the algorithm with the Flex-Algo identifier 129 (also called a Flex-Algo 129), an IGP metric is used as a metric to perform routing. Such two flexible algorithm definitions (FAD) are flooding in an IGP domain. A service on a network node is represented by a prefix (e.g., an IP-prefix represents a service destined to an IP address). On a node PE1, services represented by a prefix1 are carried by using the Flex-Algo 128, services represented by a prefix2 are carried by using the Flex-Algo 129, the prefix1 carries the Flex-Algo identifier 128, and the prefix2 carries the Flex-Algo identifier 129, so that the Flex-Algo 128 and the Flex-Algo 129 are flooding in the IGP domain.

In Fig. 7, black nodes participate in the Flex-Algo 128, white nodes participate in the Flex-Algo 129, and the flexible algorithm that each node participated in is flooding in the IGP domain. If the black node receives an advertisement of prefix1, since the black node participates in the flexible algorithm 128, a path for prefix1 can be computed, and during the path being computed, since the white nodes do not participate in the flexible algorithm 128, the path is selected and determined between the black nodes. The path finally computed is a path with a minimum delay between the black nodes. If the white node receives an advertisement of prefix2, since the white node participates in the flexible algorithm 129, a path for prefix2 can be computed, and during the path being computed, since the black nodes do not participate in the flexible algorithm 129, the path is selected and determined between the white nodes. The path finally computed is a path with a minimum IGP metric between the white nodes. If the white node receives the advertisement of prefix1, since the white node does not participate in the flexible algorithm 128, no path for prefix1 is to be computed. Similarly, if the black node receives the advertisement of prefix2, since the black node does not participate in the flexible algorithm 129, no path for prefix2 is to be computed.

However, for a scenario crossing autonomous domains, as shown in Fig. 8, because no IGP is configured between any two autonomous domains, a prefix carrying a flexible algorithm cannot be advertised to other autonomous domains, and thus an end-to-end Flex-Algo path cannot be created. For a scenario shown in Fig. 9, similarly, no link between any two autonomous domains participates in the IGP domain, so that the IGP cannot select an inter-domain link for the prefix.

An embodiment of the present disclosure provides a path establishment method, which can enable the Flex-Algo technology to support services crossing autonomous domains.

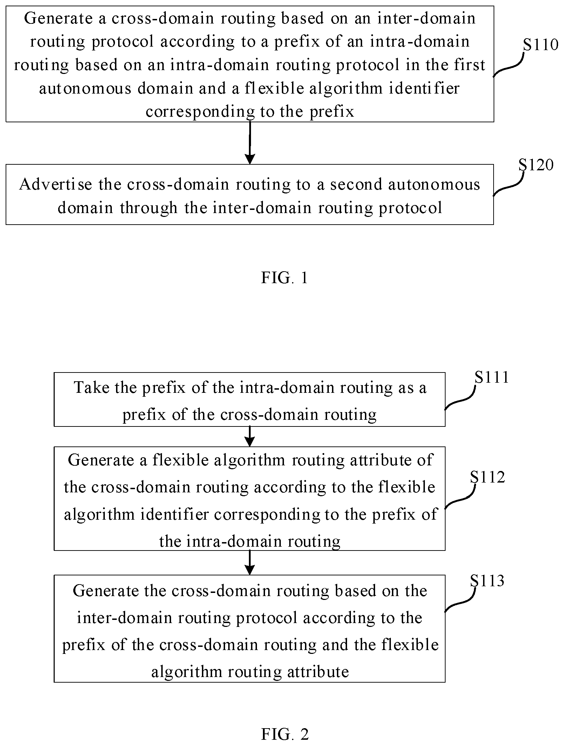

In a first aspect, an embodiment of the present disclosure provides a routing advertisement method, applied to a first ASBR in a first autonomous domain, as shown in Fig. 1, the routing advertisement method includes following operations S110 and S120.

At operation S1 10, generating a cross-domain routing based on an inter-domain routing protocol according to a prefix of an intra-domain routing based on an intra-domain routing protocol in the first autonomous domain and a flexible algorithm identifier corresponding to the prefix.

In some implementations, the intra-domain routing protocol includes an IGP.

In some implementations, the inter-domain routing protocol includes a border gateway protocol (BGP).

As described above, in existing networks, the intra-domain routing protocol can only be deployed within each single autonomous domain, configurations cannot be applied to any two autonomous domains simultaneously, a prefix carrying a flexible algorithm identifier in each autonomous domain cannot be advertised to other autonomous domains, so that an end-to-end Flex-Algo path crossing autonomous domains cannot be created.

The routing advertisement method provided in the embodiment of the present disclosure adopts the inter-domain routing protocol, such as the BGP, to send the intra-domain routing, obtained from a Flex-Algo based on the intra-domain routing protocol, and a flexible algorithm identifier corresponding thereto from one autonomous domain to another autonomous domain, thereby implementing advertisement of the intra-domain routing, obtained from the Flex-Algo based on the intra-domain routing protocol, between different autonomous domains. Because the flexible algorithm identifier is carried by the routing during the routing being forwarded, after the routing is issued to the another autonomous domain, the service isolation and the traffic engineering can still be implemented according to the flexible algorithm identifier.

It is noted that the autonomous domain in the present disclosure is not equivalent to an autonomous system (AS). As long as interworking of IGP domains is not implemented and may be implemented by an aid of a cross-domain routing protocol, the IGP domains are considered different autonomous domains. For example, there are two IGP domains, not realizing interworking therebetween, in an AS 100, and an IGP routing and a flexible algorithm identifier corresponding thereto may be sent between the two IGP domains with a help of a BGP neighbor, although the two IGP domains are in the single AS 100 but they are referred to as two autonomous domains in the present disclosure. Similarly, the BGP neighbor between the two autonomous domains may be an EBGP neighbor or an IBGP neighbor.

It is noted that the inter-domain routing protocol described in the present disclosure includes, but is not limited to, the BGP. Although the BGP is a mainstream inter-domain routing protocol employed in current industry, it does not preclude an existence of a less popularized or private inter-domain routing protocol, nor does it preclude an occurrence of other inter-domain routing protocols in future. Therefore, currently or in future, any routing protocol for enabling advertisement of prefixes and corresponding flexible algorithm identifiers between autonomous domains may be considered as the inter-domain routing protocol described in the present disclosure.

In some implementations, the prefix is any one of: an IP address prefix (IP-prefix), a prefix-segment identifier (prefix-SID), a segment routing over IPv6 (SRv6) locator.

The routing advertisement method provided in the present disclosure takes the inter-domain routing protocol being the BGP as an example. A BGP routing includes a prefix and a routing attribute. In the existing BGP routing, the prefix may include an IP address and a mask. The prefix described in the present disclosure is not limited to a prefix of IGP routing, and may also include, but is not limited to, ip-prefix, prefix-SID, SRv6 Locator, or the like.

Because a structure of a BGP update packet has scalability, all prefixes and the routing attribute described above may be transmitted between different autonomous domains in a format of BGP routing, therefore may be used to implement establishment of a Flex-Algo forwarding path across the autonomous domains.

At operation S120, advertising the cross-domain routing to a second autonomous domain through the inter-domain routing protocol.

In some implementations, the cross-domain routing is advertised to a second ASBR in the second autonomous domain through the BGP.

A BGP neighbor is established between the first ASBR in the first autonomous domain and the second ASBR in the second autonomous domain, and the first ASBR encapsulates an IGP routing in the local domain and a flexible algorithm identifier corresponding thereto into a format of BGP routing to send it to the second ASBR. The second ASBR parses the BGP routing to generate and re-issue an IGP routing and a flexible algorithm identifier in the second autonomous domain.

It should be noted that, in the routing advertisement method provided in the present disclosure, the first ASBR in the first autonomous domain and the second ASBR in the second autonomous domain are configured to be distinguished from each other by roles, the ASBR issuing the cross-domain routing is referred to as the first ASBR in the first autonomous domain, the ASBR receiving the cross-domain routing is referred to as the second ASBR in the second autonomous domain, it is not limited to that any ASBR serves only as the first ASBR or the second ASBR. In some implementations, any ASBR may be in a role of either the first ASBR or the second ASBR. The ASBR plays the role of the first ASBR during sending the cross-domain routing and plays the role of the second ASBR during receiving the cross-domain routing.

In some implementations, as shown in Fig. 2, the operation S 110 may be divided into following operations S111 to S113.

At operation S 111, taking the prefix of the intra-domain routing as a prefix of the cross-domain routing.

At operation S112, generating a flexible algorithm routing attribute of the cross-domain routing according to the flexible algorithm identifier corresponding to the prefix of the intra-domain routing.

At operation S113, generating the cross-domain routing based on the inter-domain routing protocol according to the prefix of the cross-domain routing and the flexible algorithm routing attribute.

The BGP routing includes a prefix and a routing attribute. The prefix of the intra-domain routing is taken as the prefix of the cross-domain routing. In the routing attribute of the BGP routing, an attribute related to the flexible algorithm is called the flexible algorithm routing attribute, and the flexible algorithm identifier corresponding to the prefix may serve as the flexible algorithm routing attribute to be sent to the BGP neighbor along with the prefix.

In some implementations, the flexible algorithm routing attribute includes at least one of: an AS number of an AS to which the first ASBR belongs, a node identifier of the first ASBR, and an accumulated metric value of the prefix.

The flexible algorithm routing attribute may include attributes such as the AS number of the first autonomous domain, the node identifier of the first autonomous domain, and the accumulated metric value of the prefix, and is used for any device for routing performing policy matching or performing a selection for an optimal path (or called a desired path) for routing. The accumulated metric value of the prefix may be a metric value based on a bandwidth, a metric value based on a delay, or any other type of value serving as a metric value. The type of metric value to be incorporated in the flexible algorithm routing attribute is selected according to expectations of a specific service. The accumulated metric value of the prefix is a metric value calculated for an entire path, in the first autonomous domain, from the first ASBR to an origination device of the prefix of IGP routing.

Other routing attributes may further be carried in the BGP routing, which are not limited in the routing advertisement method provided in the present disclosure, and thus are not described in detail herein.

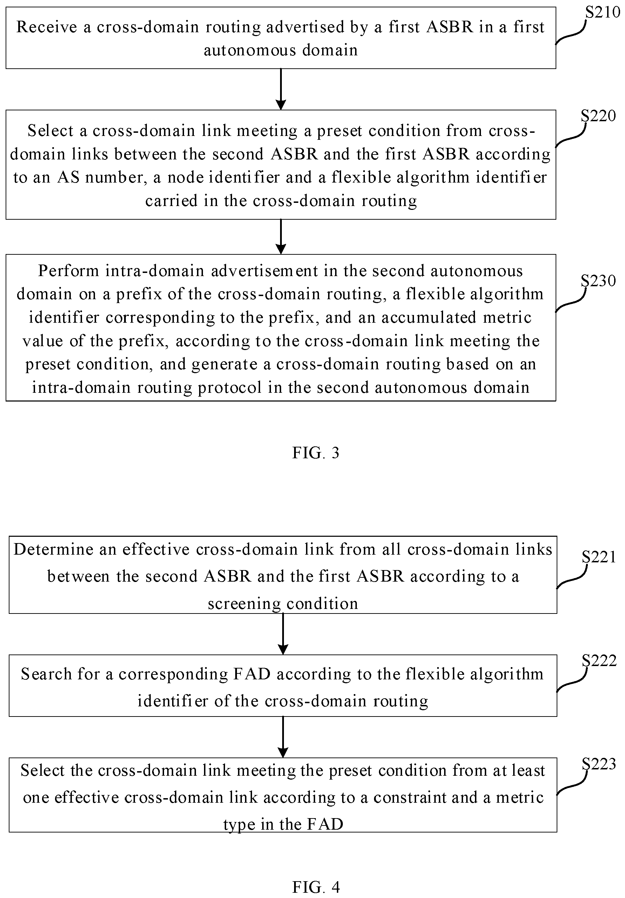

In a second aspect, an embodiment of the present disclosure provides a path establishment method, applied to a second ASBR in a second autonomous domain, as shown in Fig. 3, the path establishment method includes following operations S210 to S230.

At operation S210, receiving a cross-domain routing advertised by a first ASBR in a first autonomous domain, the cross-domain routing is a cross-domain routing based on an inter-domain routing protocol which is generated by the first ASBR according to a prefix of an intra-domain routing based on an intra-domain routing protocol in the first autonomous domain and a flexible algorithm identifier corresponding to the prefix.

As described above, in the related network, the IGP can only be deployed within the autonomous domain, and no IGP protocol is configured between any two autonomous domains, so that a prefix carrying the flexible algorithm identifier in any autonomous domain cannot be advertised to other autonomous domains, and an end-to-end Flex-Algo path cannot be created. The path establishment method provided in the present disclosure adopts the inter-domain routing protocol to send the intra-domain routing, obtained from the Flex-Algo based on the intra-domain routing protocol, and the flexible algorithm identifier corresponding thereto from the first autonomous system to the second autonomous system, so as to implement advertisement of the intra-domain routing, obtained from the Flex-Algo based on the intra-domain routing protocol, between different autonomous systems.

A BGP neighbor is established between the first ASBR and the second ASBR, and the first ASBR encapsulates an IGP routing in the local domain and a flexible algorithm identifier corresponding thereto into a format of BGP routing to send it to the second ASBR. The second ASBR parses the prefix of the BGP routing and obtains a corresponding prefix of IGP routing in the second autonomous domain, and parses corresponding information relating to the flexible algorithm identifier and obtains a flexible algorithm identifier corresponding to the prefix of IGP routing in the second autonomous domain, so as to compute Flex-Algo forwarding paths, which are mutually isolated, in subsequent operations according to different flexible algorithm identifiers.

In some implementations, the BGP routing issued by the first ASBR further includes: an AS number of an AS to which the first ASBR belongs, a node identifier of the first ASBR, and an accumulated metric value of the prefix in the first autonomous domain.

The second ASBR may parse other routing attributes of the BGP routing, to obtain information carried in the BGP routing, such as the AS number of the first ASBR, the node identifier of the first ASBR, and the like, which may be taken as a screening condition for performing preliminary screening on inter-domain links between the first ASBR and the second ASBR. The second ASBR may parse other routing attributes of the BGP routing for acquiring an accumulated metric value of the prefix of the BGP routing in the first autonomous domain to be used as a basis of the prefix for accumulating inter-domain link metric values, and for selecting a forwarding path, routing is performed according to the accumulated metric value of the entire Flex-Algo forwarding path across the autonomous domains.

At operation S220, selecting a cross-domain link meeting a preset condition from cross-domain links between the second ASBR and the first ASBR according to an AS number, a node identifier and a flexible algorithm identifier carried in the cross-domain routing.

After receiving the cross-domain routing, the cross-domain link meeting the preset condition is selected for the cross-domain routing, and the accumulated metric value based on the cross-domain link meeting the preset condition is calculated, and finally, an optimal/desired outgoing interface is selected and a forwarding table entry is generated. That is, in the operation S220, the optimal/desired cross-domain link is first selected for the cross-domain routing.

The first ASBR and the second ASBR are in the first autonomous domain and the second autonomous domain respectively, and there is a cross-domain link between the first ASBR and the second ASBR. There may be a plurality of cross-domain links, but not all cross-domain links carry the service, and therefore the cross-domain links are screened. A corresponding FAD is searched for in the second ASBR according to the algorithm identifier carried in the cross-domain routing, the cross-domain link meeting the preset condition is selected from the remaining cross-domain links according to the constraint and the metric type in the FAD, and then the cross-domain link is adopted to perform routing.

It should be noted that, the cross-domain link meeting the preset condition may be one, but not limited to one, and if there are a plurality of cross-domain links meeting a load sharing condition, all the cross-domain links meeting the expectations of the service may be selected as the cross-domain links meeting the preset condition.

At operation S230, performing intra-domain advertisement in the second autonomous domain on a prefix of the cross-domain routing, a flexible algorithm identifier corresponding to the prefix, and an accumulated metric value of the prefix, according to the cross-domain link meeting the preset condition, and generating a cross-domain routing based on an intra-domain routing protocol in the second autonomous domain.

The prefix 1 of IGP routing from the first autonomous domain carries an accumulated metric value metric1 in the first autonomous domain, and then a metric value metric2 of the optimal cross-domain link selected in the operation S220 is accumulated into the prefix1, so as to obtain the accumulated metric value metric1+metric2 of the prefix1 across the domains. Then, the prefix1, the corresponding flexible algorithm identifier and the accumulated metric value of the prefix1 are re-issued into an IGP routing table in the second autonomous domain and are advertised to all nodes within the second autonomous domain.

Similarly, the second ASBR may also issue the IGP routing in the second autonomous domain and the flexible algorithm identifier corresponding to the IGP routing to the first ASBR through the BGP neighbor in the same manner as above, and the first ASBR calculates a routing according to a corresponding flexible algorithm identifier, re-issues the routing to an IGP routing table, and advertises the routing to all nodes within the first autonomous domain. Thus, the two autonomous domains learn IGP routings from each other.

As described above, because the Flex-Algo forwarding paths are distinguished from each other according to the Flex-Algo identifiers during the paths being calculated, the Flex-Algo forwarding paths calculated within different Flex-Algo identifiers are isolated from each other, and the Flex-Algo forwarding paths calculated by using different Flex-Algo identifiers may carry different service packets respectively. Not only end-to-end traffic engineering across autonomous domains based on the Flex-Algo is implemented, but also mutual isolation of various services across autonomous domain is implemented.

In some implementations, before the operation S220, the second ASBR adds the cross-domain links between the second ASBR and the first ASBR into a database of the intra-domain routing protocol in the second autonomous domain.

After receiving the cross-domain routing, an optimal/desired cross-domain link is to be selected for the cross-domain routing, and an accumulated metric value is to be calculated based on the optimal/desired cross-domain link, so that an optimal/desired outgoing interface is selected and a forwarding table entry is generated. There may be a plurality of cross-domain links between the second ASBR and the first ASBR. After setting metric values, interface identifiers and the like of the cross-domain links, information of the cross-domain links are added into a database of the IGP for subsequently selecting the cross-domain link and calculating the forwarding path.

In some implementations, the cross-domain link is added into the database of the intra-domain routing protocol in the second autonomous domain by taking an interface identifier at a local end, an AS number at an opposite end and a node identifier at the opposite end, of the cross-domain link as a link identifier.

It should be noted that, there are generally a plurality of links at the second ASBR, in addition to the link connected to the first ASBR in the first autonomous domain, the other links may be connected to devices in the second autonomous domain or other autonomous domains in addition to links connected to the first ASBR in the first autonomous domain. An execution entity of this operation is still the second ASBR, that is, the operation is executed or performed by the second ASBR, and during any link being added into the database of the IGP, which device in which autonomous domain is at the opposite end of the link is not to be determined, i.e., the opposite end of the link is not necessarily the first ASBR. For a border router in any autonomous domain, the cross-domain link is generally connected to the device in another autonomous domain one to one, but not one to many. Thus, for the second ASBR serving as the execution entity, the cross-domain link has two ends, the "local end" is at the second ASBR, and the "opposite end" is at another end that the link is connected to, which is a general explanation in the present disclosure unless otherwise specified.

In some implementations, as shown in Fig. 4, the operation S220 may be divided into following operations S221 to S223.

At operation S221, determining an effective cross-domain link from all cross-domain links between the second ASBR and the first ASBR according to a screening condition.

In the cross-domain links between the second ASBR and the first ASBR, not all cross-domain links carry a service related to the cross-domain routing, and therefore the cross-domain links are to be screened. The screening condition may be preset, and after the cross-domain routing is received, the effective cross-domain link may be directly determined according to the preset condition, for facilitating selecting the optimal/desired cross-domain link in a next operation.

By executing the operation S221, the cross-domain links not meeting the screening condition can be excluded, and only a relatively small number of effective cross-domain links are remained, so that a computation amount can be greatly reduced in a process of selecting the optimal/desired cross-domain link in the next operation, resulting in an improved processing efficiency.

In some implementations, the screening condition includes: determining whether the AS number at the opposite end of the cross-domain link is matched with an AS number of an autonomous system, to which the first ASBR belongs, carried in a flexible algorithm routing attribute of the cross-domain routing, and whether the node identifier at the opposite end of the cross-domain link is matched with the node identifier of the first ASBR carried in the flexible algorithm routing attribute of the cross-domain routing, in response to that the AS number at the opposite end of the cross-domain link is matched with the AS number of the autonomous system, to which the first ASBR belongs, carried in the flexible algorithm routing attribute of the cross-domain routing, and the node identifier at the opposite end of the cross-domain link is matched with the node identifier of the first ASBR carried in the flexible algorithm routing attribute of the cross-domain routing, determining that the cross-domain link is the effective cross-domain link.

In response to that the AS number at the opposite end of the cross-domain link is not matched with the AS number of the autonomous system, to which the first ASBR belongs, carried in the flexible algorithm routing attribute of the cross-domain routing, the cross-domain link is excluded from the effective cross-domain links; in response to that the node identifier at the opposite end of the cross-domain link is not matched with the node identifier of the first ASBR carried in the flexible algorithm routing attribute of the cross-domain routing, the cross-domain link is excluded from the effective cross-domain links.

As indicated above, an execution entity of this operation is still the second ASBR, that is, the operation is executed or performed by the second ASBR, there are generally a plurality of links at the second ASBR, in addition to the link connected to the first ASBR in the first autonomous domain, the other links may be connected to devices in the second autonomous domain or other autonomous domains. During any link being added into the database of the IGP, which device in which autonomous domain is at the opposite end of the link is not to be determined. If all links are traversed during the cross-domain link is selected for the cross-domain routing, it is resulted in a relatively large amount of unnecessary operation cost, therefore the operation preliminary screens the links according to the AS and the node identifier at the opposite end of each link, and if the opposite end of the link is not the first ASBR, the link is not to participate in the subsequent operation of selecting the optimal/desired cross-domain link, resulting in a reduced amount of operation, and an improved processing efficiency.

At operation S222, searching for a corresponding FAD according to the flexible algorithm identifier of the cross-domain routing.

In order to implement that a uniform traffic model is adopted on a service path across autonomous domains, flexible algorithms adopted for routing in the autonomous domains are expected to be matched with each other, and the flexible algorithm identifier carried in the cross-domain routing sent from the first autonomous domain is desired to be corresponding to the flexible algorithm identifier in the second autonomous domain. Therefore, the corresponding FAD is to be searched for at the second ASBR according to the flexible algorithm identifier carried in the cross-domain routing.

At operation S223, selecting the cross-domain link meeting the preset condition from at least one effective cross-domain link according to a constraint and a metric type in the FAD.

The FAD generally includes: a calculation type, a metric type, a constraint. After the corresponding FAD is determined on the second ASBR according to the flexible algorithm identifier parsed from the cross-domain routing, based on the metric type and the constraint in the FAD, the effective cross-domain links obtained in the operation S221 are further screened to select the cross-domain link meeting the preset condition for subsequently calculating a cross-domain path. The preset condition to be met includes, but is not limited to, the metric type and the constraint in the FAD, may include an access control list, a path strategy, black and white lists, and the like preset by the user, or may include a total number of cross-domain links meeting the preset condition, and it may be set that one or more optimal/desired cross-domain links are to be selected, which are not listed here one by one. Any way of selecting the cross-domain link according to the preset condition is within the protection scope of present disclosure.

An advantage of the Flex-Algo technology is that different service forwarding paths isolated from each other can be calculated by configuring different flexible algorithms, therefore expectations of traffic engineering are met. The path establishment method provided in the embodiment of the present disclosure is to establish a cross-domain path based on the Flex-Algo technology, and thus the flexible algorithm identifier is carried in the cross-domain routing. The algorithm identifier adopted in the first autonomous domain is carried into the second autonomous domain. In the second autonomous domain, the prefix of the routing, the flexible algorithm identifier and the accumulated metric value are re-issued to the IGP routing table, and routing is performed according to the corresponding flexible algorithm identifier. The finally calculated Flex-Algo forwarding path across the autonomous domains can meet the expectations of cross-domain traffic engineering.

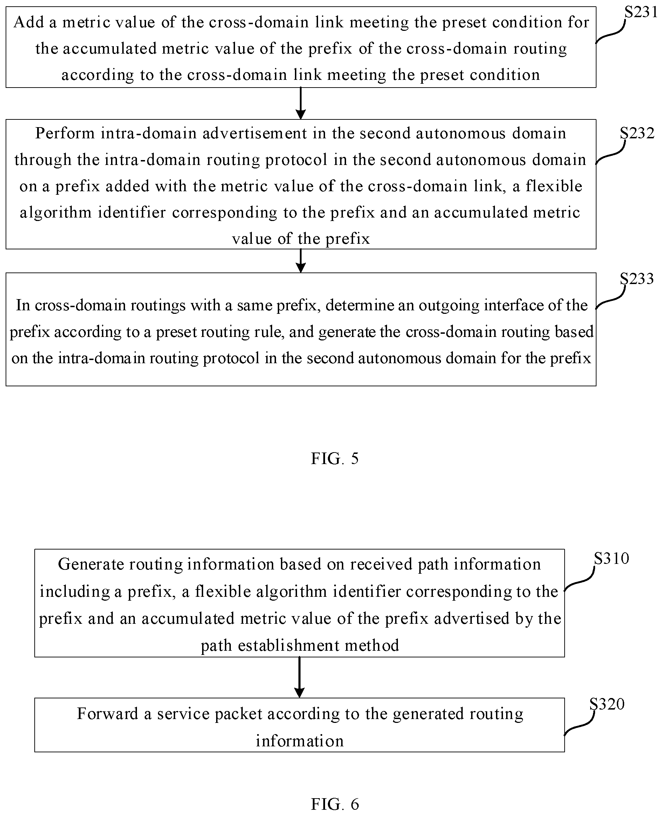

In some implementations, as shown in Fig. 5, the operation S230 may be divided into following operations S231 to S233.

At operation S231, adding a metric value of the cross-domain link meeting the preset condition for the accumulated metric value of the prefix of the cross-domain routing according to the cross-domain link meeting the preset condition.

During the first ASBR encapsulates the prefix of the IGP routing in the first autonomous domain into a packet of BGP routing, the accumulated metric value of the prefix of the IGP routing in the first autonomous domain is added into the routing attribute of the BGP routing. After receiving the prefix, the second ASBR obtains the accumulated metric value of the prefix by parsing the routing attribute.

According to the cross-domain link, meeting the preset condition, selected in the operation S220, the metric value of the cross-domain link meeting the preset condition is accumulated to the accumulated metric value of the prefix, so as to obtain the accumulated metric value of the prefix in the second autonomous domain.

At operation S232, performing intra-domain advertisement in the second autonomous domain through the intra-domain routing protocol in the second autonomous domain on a prefix added with the metric value of the cross-domain link, a flexible algorithm identifier corresponding to the prefix and an accumulated metric value of the prefix.

After parsing the prefix from the BGP routing, and adding the metric value of the cross-domain link to obtain the accumulated metric value of the prefix in the second autonomous domain, the prefix is re-issued to the IGP domain, and the IGP floods the prefix, the flexible algorithm identifier corresponding to the prefix and the accumulated metric value of the prefix within the IGP domain of the second autonomous domain.

At operation S233, in cross-domain routings with the same prefix, determining an outgoing interface of the prefix according to a preset routing rule, and generating the cross-domain routing based on the intra-domain routing protocol in the second autonomous domain for the prefix (e.g., a forwarding table entry of cross-domain IGP routing for the prefix is generated), the preset routing rule includes comparing accumulated metric values of the cross-domain routings (e.g., accumulated metric values of prefixes).

On the second ASBR, routings with the same prefix may be received from different BGP neighbors, or from other nodes within the domain, therefore, there may be a plurality of routings with the same prefix simultaneously in the second ASBR. The routings with the same prefix is to be screened, to select a forwarding path of the prefix according to the preset routing rule, so as to obtain the outgoing interface of the routing.

The preset routing rule includes, but is not limited to, comparing attributes such as routing priorities and accumulated metric values. On equal conditions, a path with a minimum accumulated metric value is to be selected. Certainly, other rules may be set, for example, the routing priority or metric value may be adjusted through a routing policy, routing may be limited by setting an IGP tag, a total number of optimal/desired paths may be controlled by setting load sharing, and the like, so that an optimal/desired path is finally selected.

It should be noted that one or more optimal/desired paths corresponding to the prefix may be selected in the operation S233, and if there are a plurality of paths meeting the condition of load sharing, a plurality of cross-domain paths meeting service expectations may be selected as the optimal paths. Therefore, the outgoing interface is not limited to one.

In a third aspect, an embodiment of the present disclosure provides a service data transmission method, as shown in Fig. 6, including following operations S310 and S320.

At operation S310, generating routing information (e.g. an intra-domain routing) based on received path information (e.g. link state information), the path information including a prefix, a flexible algorithm identifier corresponding to the prefix and an accumulated metric value of the prefix advertised by the path establishment method described above.

At operation S320, forwarding a service packet according to the generated routing information (e.g. the intra-domain routing).

Many of services in present network are to be forwarded across autonomous domains, with the service data transmission method provided in the embodiment of the present disclosure, according to the cross-domain routing based on the intra-domain routing protocol in the second autonomous domain obtained in the second aspect and the corresponding flexible algorithm identifier, the intra-domain routing in the first autonomous domain and the corresponding flexible algorithm identifier in the first aspect, and the cross-domain link meeting the preset condition, an end-to-end Flex-Algo forwarding path is formed. For forwarding the service packet, the cross-domain routing and the corresponding flexible algorithm are selected according to a destination address and a service expectation, so as to implement cross-domain forwarding of the service packet.

The methods provided in the first, second and third aspects in the present disclosure are described below with reference to three examples.

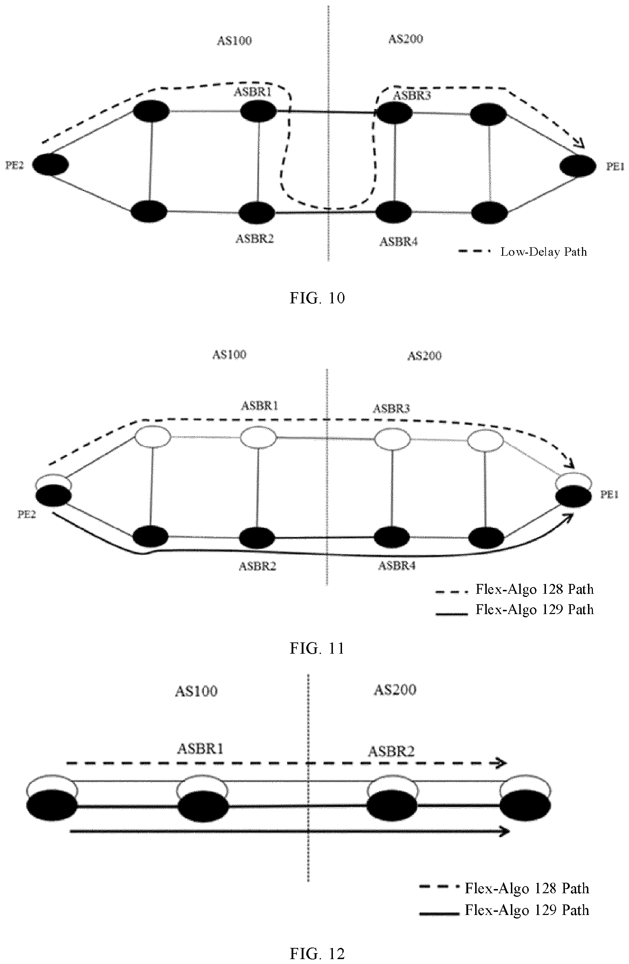

In a first example, as shown in Fig. 10, an end-to-end traffic engineering path crossing autonomous domains is to be established based on the Flex-Algo. A relationship between functional entities in the example is as follows: PE1 and PE2 are located in AS200 and AS100, respectively, and a service between PE1 and PE2 crosses autonomous domains AS100 and AS200. ASBR1 and ASBR2 are autonomous system border routers of AS100, ASBR 3 and ASBR4 are autonomous system border routers of AS200, a BGP neighbor is established between ASBR1 and ASBR3, and a BGP neighbor is established between ASBR2 and ASBR4. A service expectation is that the service is sensitive to delay and is desired to be forwarded through a path with a minimum delay.

Implementation operations include following operations (11) and (19).
(11) A Flex-Algo identifier of a flexible algorithm is defined as 128, a metric type in FAD is set as a delay, a forwarding path is provided for a low-delay service, the FAD is flooding by IGP in two autonomous domains, and all nodes in the two autonomous domains participate in a flexible algorithm 128.
(12) A cross-domain link between the ASBR1 and the ASBR3 and a cross-domain link between the ASBR2 and the ASBR4 are added into a database of the IGP of a cross-domain node, the cross-domain link is to be identified by [interface identifier at a local end, AS number at an opposite end, node identifier at the opposite end].
(13) A delay of each cross-domain link is determined in a manner of configuring or dynamically detecting the delay of the link, a delay metric value of each link is set, and a low-delay path is shown by a dotted line in Fig. 10.
(14) A prefix with the Flex-Algo identifier 128 is defined on PE1, and is advertised in the autonomous domain through IGP.
(15) ASBR3 advertises the prefix with the Flex-Algo identifier 128 by BGP to ASBR1, with an advertisement carrying an accumulated delay metric value of the prefix, and an AS number and a node identifier of ASBR3. ASBR4 advertises the prefix with the Flex-Algo identifier 128 by BGP to ASBR2, with an advertisement carrying an accumulated delay metric value of the prefix, and an AS number and a node identifier of ASBR4.
(16) ASBR1 receives the advertisement from ASBR3, searches for a corresponding FAD on ASBR1 by using the Flex-Algo identifier 128 carried in the advertisement, filters cross-domain links by using the AS number and the node identifier carried in the advertisement, and selects the cross-domain link with a minimum delay by using a metric type in the FAD. The finally selected cross-domain link is the link between ASBR3 and ASBR1. The delay metric value of the finally selected cross-domain link is added into the accumulated delay metric value of the prefix, then the prefix, the Flex-Algo identifier 128 and the accumulated delay metric value are advertised in an IGP domain.
(17) ASBR2 receives the advertisement from ASBR4, and finally selects the cross-domain link which is a link between ASBR4 and ASBR2, and a process flow of ASBR2 is the same as that of ASBR1.
(18) After ASBR1 receives a prefix, a flexible algorithm identifier and an accumulated delay metric value advertised by ASBR2, since the accumulated delay metric delay advertised by ASBR2 is smaller, a path selected for the prefix on ASBR1 is to ASBR2 instead of ASBR3. Therefore, an outgoing interface and a next hop of a routing forwarding table entry of the prefix on ASBR1 direct to ASBR2.
(19) Any Node in AS100 calculates a path with a minimum delay for the prefix according to a standard Flex-Algo, and finally a forwarding path with a minimum delay is formed as shown by a dotted line in Fig. 10.

In a second example, as shown in Fig. 11, an end-to-end network slice with node isolation across autonomous domains is to be established based on the Flex-Algo. A relationship between functional entities in the example is as follows: PE1 and PE2 are located in AS200 and AS100, respectively, and a service between PE1 and PE2 crosses autonomous domains AS100 and AS200. ASBR1 and ASBR2 are autonomous system border routers of AS100, ASBR 3 and ASBR4 are autonomous system border routers of AS200, a BGP neighbor is established between ASBR1 and ASBR3, and a BGP neighbor is established between ASBR2 and ASBR4. A service expectation is that two service forwarding paths are isolated from each other to avoid mutual influences.

Implementation operations include following operations (21) and (210).
(21) A Flex-Algo identifier of a flexible algorithm is defined as 128, a metric type is set as an IGP, a forwarding path is provided for a service 1, FAD is flooding by IGP in two autonomous domains, and all white nodes in the two autonomous domains participate in a Flex-Algo 128.
(22) A Flex-Algo identifier of a flexible algorithm is defined as 129, a metric type is set as an IGP, a forwarding path is provided for a service 2, FAD is flooding by IGP in two autonomous domains, and all black nodes in the two autonomous domains participate in a Flex-Algo 129.
(23) Cross-domain links are added into a database of the IGP of a cross-domain node, the cross-domain link is to be identified by [interface identifier at a local end, AS number at an opposite end, node identifier at the opposite end].
(24) A prefix1 with the Flex-Algo identifier 128 and a prefix2 with the Flex-Algo identifier 129 are defined on PE1, then are advertised in the autonomous domain through IGP.
(25) ASBR3 advertises the prefix1 with the Flex-Algo identifier 128 by BGP to ASBR1, with an advertisement carrying an accumulated IGP metric value of the prefix1, and an AS number and a node identifier of ASBR3. ASBR4 advertises the prefix with the Flex-Algo 129 by BGP to ASBR2, with an advertisement carrying an accumulated IGP metric value of the prefix2, and an AS number and a node identifier of ASBR4.
(26) ASBR1 receives the advertisement from ASBR3, searches for a FAD by using the Flex-Algo identifier 128 carried in the advertisement, filters cross-domain links by using the AS number and the node identifier carried in the advertisement, and selects the cross-domain link with a minimum IGP metric value by using a metric type in the FAD. The finally selected cross-domain link is a link between ASBR3 and ASBR1. The IGP metric value of the final selected cross-domain link is added into the accumulated IGP metric value of the prefix1, then the prefix1, the Flex-Algo identifier 128 and the accumulated IGP metric value are advertised in an IGP domain.
(27) ASBR2 receives the advertisement from ASBR4, finally selects the cross-domain link which is a link between ASBR4 and ASBR2, and a process flow of ASBR2 is the same as that of ASBR1.
(28) After ASBR1 receives prefix2, a flexible algorithm identifier, and an accumulated IGP metric value advertised by ASBR2, since ASBR1 does not participate in the algorithm 129, no path is to be calculated for the prefix2.
(29) After ASBR2 receives prefix1, a flexible algorithm identifier and an accumulated IGP metric value advertised by ASBR1, since ASBR2 does not participate in the algorithm 128, no path is to be calculated for the prefix1.
(210) Through above operations (21) to (29), a forwarding path shown by a dotted line in Fig. 11 is finally formed for the service 1, and a forwarding path shown by a solid line in Fig. 11 is finally formed for the service 2, and both the paths are end-to-end isolated from each other.

In a third example, as shown in Fig. 12, an end-to-end network slice with link isolation across autonomous domains is to be established based on the Flex-Algo. A relationship between functional entities in the example is as follows: PE1 and PE2 are located in AS200 and AS100, respectively, and a service between PE1 and PE2 crosses autonomous domains AS100 and AS200. ASBR1 is an autonomous system border router of AS100, ASBR2 is an autonomous system border router of AS200, and a BGP neighbor is established between ASBR1 and ASBR2. A service expectation is that two service forwarding paths are isolated from each other to guarantee service bandwidth, and avoid mutual influences.

Implementation operations include following operations (31) and (37).
(31) A Flex-Algo identifier of a flexible algorithm is defined as 128, a metric type is set as an IGP, a white link (a link between white dots) is desired for providing a forwarding path for a service 1, FAD is flooding by IGP in two autonomous domains, and all nodes in the two autonomous domains participate in a flexible algorithm 128.
(32) A Flex-Algo identifier of a flexible algorithm is defined as 129, a metric type is set as an IGP, a black link (a link between black dots) is desired for providing a forwarding path for a service 2, FAD is flooding by IGP in two autonomous domains, and all nodes in the two autonomous domains participate in a flexible algorithm 129.
(33) Cross-domain links are added into a database of the IGP of a cross-domain node, the cross-domain link is to be identified by [interface identifier at a local end, AS number at an opposite end, node identifier at the opposite end].
(34) A prefix1 with the Flex-Algo identifier 128 and a prefix2 with the Flex-Algo identifier 129 are defined on PE1, then are advertised in the autonomous domain through IGP.
(35) ASBR2 advertises the prefix1 and prefix2 with algorithms to ASBR1 by BGP, with an advertisement carrying the accumulated IGP metric values of prefix1 and prefix2, and an AS number and a node identifier of ASBR2.
(36) ASBR1 receives the advertisement from ASBR2, searches for a FAD by using the flexible algorithm identifier carried in the advertisement, and filters cross-domain links by using the AS number and node identifier carried in the advertisement, if an affinity constraint set in the FAD is prefix1, links that are not white links are excluded, if the affinity constraint set in the FAD is prefix2, links that are not black links are excluded, and then the cross-domain link with a minimum IGP metric value is selected according to a metric type in the FAD. Since there are only one white link and one black link, the white cross-domain link is finally selected for prefix1, and the black cross-domain link is selected for prefix2. An IGP metric value of the cross-domain link is added into the accumulated IGP metric value of prefix1, and then the prefix1, the Flex-Algo identifier and the accumulated IGP metric value are advertised in an IGP domain. An IGP metric value of the cross-domain link is added into the accumulated IGP metric value of prefix2, and then the prefix2, the Flex-Algo identifier and the accumulated IGP metric value are advertised in the IGP domain.
(37) Through above operations (31) to (36), a forwarding path shown by a dotted line in Fig. 12 is finally formed for the service 1, and a forwarding path shown by a solid line in Fig. 12 is finally formed for the service 2, and the two paths take their own service links respectively and do not consume bandwidth of each other.

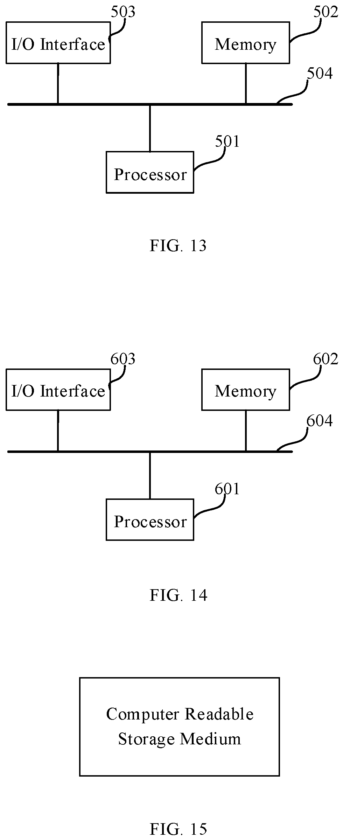

In a fourth aspect, referring to Fig. 13, an embodiment of the present disclosure provides an ASBR including: at least one processor 501 (only one shown in Fig. 13); a memory 502 having at least one computer program stored thereon, the at least one computer program, executed by the at least one processor 501, causes the at least one processor 501 to implement the routing advertisement method described in the first aspect, or the path establishment method described in the second aspect; and at least one I/O interface 503 connected between the processor 501 and the memory 502 and configured to implement information interaction between the processor 501 and the memory 502.

The processor 501 is a device having a capability of processing data, includes, but is not limited to, a Central Processing Unit (CPU), and the like; the memory 502 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 503 is connected between the processor 501 and the memory 502, can implement information interaction between the processor 501 and the memory 502, and includes, but is not limited to, a data Bus, and the like.

In some implementations, the processor 501, the memory 502, and the I/O interface 503 are connected together through a bus 504, and are further connected to other components of a computing device.

In a fifth aspect, referring to Fig. 14, an embodiment of the present disclosure provides a provider edge for a service provider, including: at least one processor 601 (only one shown in Fig. 14); a memory 602 having at least one computer program stored thereon, the at least one computer program, executed by the at least one processor 601, causes the at least one processor 601 to implement the service data transmission method described in the third aspect; and at least one I/O interface (read/write interface) 603 connected between the processor 601 and the memory 602 and configured to implement information interaction between the processor 601 and the memory 602.

The processor 601 is a device having a capability of processing data, includes, but is not limited to, a Central Processing Unit (CPU), and the like; the memory 602 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface 603 is connected between the processor 601 and the memory 602, can implement information interaction between the processor 601 and the memory 602, and includes, but is not limited to, a data Bus, and the like.

In some implementations, the processor 601, the memory 602, and the I/O interface 603 are connected together through a bus 604, and are further connected to other components of a computing device.

In a sixth aspect, as shown in Fig. 15, an embodiment of the present disclosure provides a computer readable storage medium having a computer program stored thereon, the computer program, executed by a processor, causes the processor to perform the routing advertisement method described in the first aspect, the path establishment method described in the second aspect, or the service data transmission method described in the third aspect.

Through the routing advertisement method, the path establishment method and the service data transmission method provided in the present disclosure, the intra-domain routing carrying Flex-Algo based on the intra-domain routing protocol is issued through the inter-domain routing protocol, so as to enable the Flex-Algo to perform path calculation across domains, so that the end-to-end Flex-Algo forwarding path across domains is established. Because Flex-Algo forwarding paths are distinguished according to Flex-Algo identifiers during the process of path calculation, the Flex-Algo forwarding paths calculated within different Flex-Algo identifiers are isolated from each other, and can carry different service packets respectively. Not only end-to-end traffic engineering across autonomous domains based on Flex-Algo is implemented, but also mutual isolation of various services across autonomous domains is implemented.

It should be understood by those of ordinary skill in the art that all or some of the operations in the method, systems, the functional modules/components in the apparatuses applied above may be implemented as software, firmware, hardware, or suitable combinations thereof.

In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be allocated on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The exemplary embodiments and implementations of the present disclosure are described above with reference to the accompanying drawings, but are not intended to limit the scope of the claims of the present disclosure. Any modifications, equivalents, and improvements made by those skilled in the art without departing from the scope and spirit of the present disclosure are intended to be within the scope of the claims of the present disclosure.

## Claims

1. A routing advertisement method, applied to a first autonomous system border router (ASBR) in a first autonomous domain, comprising:
generating a cross-domain routing based on an inter-domain routing protocol according to a prefix of an intra-domain routing based on an intra-domain routing protocol in the first autonomous domain and a flexible algorithm identifier corresponding to the prefix; and
advertising the cross-domain routing to a second autonomous domain through the inter-domain routing protocol.

2. The method of claim 1, wherein the generating a cross-domain routing based on an inter-domain routing protocol according to a prefix of an intra-domain routing based on an intra-domain routing protocol in the first autonomous domain and a flexible algorithm identifier corresponding to the prefix comprises:
taking the prefix of the intra-domain routing as a prefix of the cross-domain routing;
generating a flexible algorithm routing attribute of the cross-domain routing according to the flexible algorithm identifier corresponding to the prefix of the intra-domain routing; and
generating the cross-domain routing based on the inter-domain routing protocol according to the prefix of the cross-domain routing and the flexible algorithm routing attribute.

3. The method of claim 2, wherein the flexible algorithm routing attribute comprises at least one of:
an autonomous system (AS) number of an autonomous system to which the first ASBR belongs, a node identifier of the first ASBR, and an accumulated metric value of the prefix.

4. The method of any one of claims 1 to 3, wherein the intra-domain routing protocol comprises an internal gateway protocol (IGP).

5. The method of any one of claims 1 to 3, wherein the inter-domain routing protocol comprises a border gateway protocol (BGP), and the advertising the cross-domain routing to a second autonomous domain through the inter-domain routing protocol comprises:
advertising the cross-domain routing to a second ASBR in the second autonomous domain through the BGP.

6. The method of any one of claims 1 to 3, wherein the prefix is selected from any one of:
an IP address prefix (IP-prefix), a prefix-segment identifier (SID), a segment routing over IPv6 (SRv6) locator.

7. A path establishment method, applied to a second autonomous system border router (ASBR) in a second autonomous domain, comprising:
receiving a cross-domain routing advertised by a first ASBR in a first autonomous domain, wherein the cross-domain routing is a cross-domain routing based on an inter-domain routing protocol and is generated by the first ASBR according to a prefix of an intra-domain routing based on an intra-domain routing protocol in the first autonomous domain and a flexible algorithm identifier corresponding to the prefix;
selecting a cross-domain link meeting a preset condition from cross-domain links between the second ASBR and the first ASBR according to an AS number, a node identifier and a flexible algorithm identifier carried in the cross-domain routing; and
performing intra-domain advertisement in the second autonomous domain on a prefix of the cross-domain routing, a flexible algorithm identifier corresponding to the prefix, and an accumulated metric value of the prefix, according to the cross-domain link meeting the preset condition, and generating a cross-domain routing based on an intra-domain routing protocol in the second autonomous domain.

8. The method of claim 7, wherein the selecting a cross-domain link meeting a preset condition from cross-domain links between the second ASBR and the first ASBR according to an AS number, a node identifier and a flexible algorithm identifier carried in the cross-domain routing comprises:
determining an effective cross-domain link from all the cross-domain links between the second ASBR and the first ASBR according to a screening condition;
searching for a corresponding flexible algorithm definition (FAD) according to the flexible algorithm identifier of the cross-domain routing; and
selecting the cross-domain link meeting the preset condition from at least one effective cross-domain link according to a constraint and a metric type in the FAD.

9. The method of claim 8, further comprising:
before the selecting a cross-domain link meeting a preset condition from cross-domain links between the second ASBR and the first ASBR according to an AS number, a node identifier and a flexible algorithm identifier carried in the cross-domain routing, adding the cross-domain links between the second ASBR and the first ASBR into a database of the intra-domain routing protocol in the second autonomous domain.

10. The method of claim 9, wherein the adding the cross-domain links between the second ASBR and the first ASBR into a database of the intra-domain routing protocol in the second autonomous domain comprises:
adding the cross-domain links into the database of the intra-domain routing protocol in the second autonomous domain by taking an interface identifier at a local end of the cross-domain link, an AS number at an opposite end of the cross-domain link and a node identifier at the opposite end of the cross-domain link as a link identifier.

11. The method of claim 10, wherein the screening condition comprises:
determining whether the AS number at the opposite end of the cross-domain link is matched with an AS number of an autonomous system, to which the first ASBR belongs, carried in a flexible algorithm routing attribute of the cross-domain routing, and whether the node identifier at the opposite end of the cross-domain link is matched with a node identifier of the first ASBR carried in the flexible algorithm routing attribute of the cross-domain routing, in response to that the AS number at the opposite end of the cross-domain link is matched with the AS number of the autonomous system, to which the first ASBR belongs, carried in the flexible algorithm routing attribute of the cross-domain routing, and the node identifier at the opposite end of the cross-domain link is matched with the node identifier of the first ASBR carried in the flexible algorithm routing attribute of the cross-domain routing, determining that the cross-domain link is the effective cross-domain link.

12. The method of any one of claims 7 to 11, wherein the performing intra-domain advertisement in the second autonomous domain on a prefix of the cross-domain routing, a flexible algorithm identifier corresponding to the prefix, and an accumulated metric value of the prefix, according to the cross-domain link meeting the preset condition, and generating a cross-domain routing based on an intra-domain routing protocol in the second autonomous domain comprises:
adding a metric value of the cross-domain link meeting the preset condition for the accumulated metric value of the prefix of the cross-domain routing according to the cross-domain link meeting the preset condition;
performing intra-domain advertisement in the second autonomous domain through the intra-domain routing protocol in the second autonomous domain on a prefix added with the metric value of the cross-domain link, a flexible algorithm identifier corresponding to the prefix and an accumulated metric value of the prefix; and
in cross-domain routings with a same prefix, determining an outgoing interface of the prefix according to a preset routing rule, and generating the cross-domain routing based on the intra-domain routing protocol in the second autonomous domain for the prefix, wherein the preset routing rule comprises comparing accumulated metric values of prefixes.

13. A service data transmission method, applied to a provider edge (PE) of a service provider in a second autonomous domain, comprising:
generating an intra-domain routing based on received link state information, the link state information comprising a prefix, a flexible algorithm identifier corresponding to the prefix and an accumulated metric value of the prefix advertised by the path establishment method of any one of claims 7 to 12; and
forwarding a service packet according to the generated intra-domain routing.

14. An autonomous system border router (ASBR), comprising:
at least one processor;
a memory having at least one computer program stored thereon, the at least one computer program, executed by the at least one processor, causes the at least one processor to implement the routing advertisement method of any one of claims 1 to 6, or the path establishment method of any one of claims 7 to 12; and
at least one I/O interface connected between the processor and the memory and configured to implement information interaction between the processor and the memory.

15. A provider edge for a service provider, comprising:
at least one processor;
a memory having at least one computer program stored thereon, the at least one computer program, executed by the at least one processor, causes the at least one processor to implement the service data transmission method of claim 13; and
at least one I/O interface connected between the processor and the memory and configured to implement information interaction between the processor and the memory.

16. A computer-readable storage medium having a computer program stored thereon, the computer program, executed by a processor, causes the processor to implement the routing advertisement method of any one of claims 1 to 6, the path establishment method of any one of claims 7 to 12, or the service data transmission method of claim 13.
